# EUROPEAN PATENT APPLICATION

(11) **EP 4 525 354 A1**
(43) Date of publication of application: **19.03.2025**
(21) Application number: 22941049.3
(22) Date of filing: 09.05.2022
(51) Int. Cl.: H04L 9/32, H04W 12/084

(54) **SUBSCRIPTION PROCESSING METHOD AND APPARATUS, AND MEDIUM AND CHIP**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Gunzelmann, Rainer
(86) International application number: PCT/CN2022/091814
(87) International publication number: WO 2023/216082

(57) **Abstract**

The present disclosure relates to a subscription processing method and apparatus, a medium and a chip. The method comprises: a first entity acquiring an access token; sending a first service request message to a second entity according to a subscription service to be requested and the access token; and receiving a first service response message, which is sent by the second entity, so as to acquire a processing result of the subscription service, wherein the access token may be used for representing security verification information used by the first entity to request the processing of the subscription service, the first service request message may comprise the access token and the first service response message is a message sent by the second entity after the second entity performs security verification on the first entity according to the access token. **In** this way, when the first entity makes a subscription request, security verification is performed on the first entity according to the access token, such that the reliability and security of a communication system can be improved.

## Description

### TECHNICAL FIELD

The present disclosure relates to the field of communication technology, and in particular to a subscription processing method and apparatus, and a medium and a chip.

### BACKGROUND

In wireless communication systems, 3rd Generation Partnership Project (3GPP) defines a network capability exposure architecture that provides a series of application programming interfaces (APIs) for third-party applications. The APIs can be used by the third-party applications to access 3GPP networks and subscribe to network information.

In the 4th Generation Mobile Communications Technology (4G) network architecture, a services capability server/application server (SCS/AS) may obtain 3GPP network capabilities via the interface (e.g., T8) provided by a service capability exposure function (SCEF) entity.

In the 5th Generation Mobile Communications Technology (5G) network architecture, an application function (AF) entity may obtain 3GPP network information via the interface (e.g., Nnef or N33) provided by a network exposure function (NEF) entity. Currently, how to perform a security verification on the AF entity or SCS/AS entity before exposing the network information to the AF entity or SCS/AS entity remains a problem to be solved.

### SUMMARY

In order to overcome the above problem in the related art, the present disclosure provides a subscription processing method and apparatus, a medium and a chip.

In a first aspect according to embodiments of the present disclosure, a subscription processing method is provided. The method is performed by a first entity, and includes:
obtaining an access token, in which the access token is used for representing security verification information used by the first entity in requesting to process a subscription service;
sending a first service request message to a second entity according to the subscription service to be requested and the access token, in which the first service request message includes the access token; and
receiving a first service response message sent by the second entity to obtain a processing result of the subscription service, in which the first service response message is a message sent by the second entity after performing a security verification on the first entity according to the access token.

In a second aspect according to embodiments of the present disclosure, a subscription processing method is provided. The method is performed by a second entity, and includes:
receiving a first service request message sent by a first entity, in which the first service request message includes an access token, and the access token is used for representing security verification information used by the first entity in requesting to process a subscription service;
performing a security verification on the first entity according to the access token; and
sending a first service response message to the first entity according to a result of the security verification, in which the first service response message includes a processing result of the subscription service.

In a third aspect according to embodiments of the present disclosure, a subscription processing method is provided. The method is performed by a third entity, and includes:
receiving a token request message, in which the token request message is a message sent by a first entity according to a subscription service to be authorized;
determining, according to the token request message, whether the first entity satisfies a first preset access authorization policy;
in a case that it is determined that the first entity satisfies the first preset access authorization policy, obtaining an access token, in which the access token is used for representing security verification information used by the first entity in requesting to process the subscription service; and
sending a token response message to the first entity according to the access token, in which the token response message is used for instructing the first entity to obtain the access token.

In a fourth aspect according to embodiments of the present disclosure, a subscription processing apparatus is provided. The apparatus is applied to a first entity, and includes:
a token determination module, configured to obtain an access token, in which the access token is used for representing security verification information used by the first entity in requesting to process a subscription service;
a first sending module, configured to send a first service request message to a second entity according to the subscription service to be requested and the access token, in which the first service request message includes the access token; and
a first receiving module, configured to receive a first service response message sent by the second entity to obtain a processing result of the subscription service, in which the first service response message is a message sent by the second entity after performing a security verification on the first entity according to the access token.

In a fifth aspect according to embodiments of the present disclosure, a subscription processing apparatus is provided. The apparatus is applied to a second entity, and includes:
a second receiving module, configured to receive a first service request message sent by a first entity, in which the first service request message includes an access token, and the access token is used for representing security verification information used by the first entity in requesting to process a subscription service;
a security verification module, configured to perform a security verification on the first entity according to the access token; and
a second sending module, configured to send a first service response message to the first entity according to a result of the security verification, in which the first service response message includes a processing result of the subscription service.

In a sixth aspect according to embodiments of the present disclosure, a subscription processing apparatus is provided. The apparatus is applied to a third entity, and includes:
a third receiving module, configured to receive a token request message, in which the token request message is a message sent by a first entity according to a subscription service to be authorized;
a policy verification module, configured to determine whether the first entity satisfies a first preset access authorization policy according to the token request message;
a token obtaining module, configured to obtain an access token in a case that it is determined that the first entity satisfies the first preset access authorization policy, in which the access token is used for representing security verification information used by the first entity in requesting to process the subscription service; and
a third sending module, configured to send a token response message to the first entity according to the access token, in which the token response message is used for instructing the first entity to obtain the access token.

In a seventh aspect according to embodiments of the present disclosure, a subscription processing apparatus is provided. The apparatus includes:
a processor, and
a memory for storing processor-executable instructions;
in which the processor is configured to execute the steps of the subscription processing method provided in the first aspect of the present disclosure.

In an eighth aspect according to embodiments of the present disclosure, a subscription processing apparatus is provided. The apparatus includes:
a processor, and
a memory for storing processor-executable instructions;
in which the processor is configured to execute the steps of the subscription processing method provided in the second aspect of the present disclosure.

In a ninth aspect according to embodiments of the present disclosure, a subscription processing apparatus is provided. The apparatus includes:
a processor, and
a memory for storing processor-executable instructions;
in which the processor is configured to execute the steps of the subscription processing method provided in the third aspect of the present disclosure.

In a tenth aspect according to embodiments of the present disclosure, a computer-readable storage medium on which computer program instructions are stored is provided. When the computer program instructions are executed by a processor, the steps of the subscription processing method provided in the first aspect of the present disclosure are implemented.

In an eleventh aspect according to embodiments of the present disclosure, a computer-readable storage medium on which computer program instructions are stored is provided. When the computer program instructions are executed by a processor, the steps of the subscription processing method provided in the second aspect of the present disclosure are implemented.

In the twelfth aspect according to embodiments of the present disclosure, a computer-readable storage medium on which computer program instructions are stored is provided. When the computer program instructions are executed by a processor, the steps of the subscription processing method provided in the third aspect of the present disclosure are implemented.

In a thirteenth aspect according to embodiments of the present disclosure, a chip is provided, in which the chip includes: a processor and an interface; and the processor is configured to read instructions to execute the steps of the subscription processing method provided in the first aspect of the present disclosure.

In the fourteenth aspect according to embodiments of the present disclosure, a chip is provided, in which the chip includes: a processor and an interface; and the processor is configured to read instructions to execute the steps of the subscription processing method provided in the second aspect of the present disclosure.

In a fifteenth aspect according to embodiments of the present disclosure, a chip is provided, in which the chip includes: a processor and an interface; and the processor is configured to read instructions to execute the steps of the subscription processing method provided in the third aspect of the present disclosure.

The technical solution provided by the embodiments of the present disclosure may include the following beneficial effects: obtaining an access token; sending a first service request message to a second entity according to a subscription service to be requested and the access token; receiving a first service response message sent by the second entity to obtain the processing result of the subscription service. The access token can be used for representing the security verification information used by the first entity in requesting to process the subscription service; the first service request message may include the access token; the first service response message is a message sent by the second entity after performing security verification on the first entity according to the access token. In this way, when the first entity makes a subscription request, a security verification is performed on the first entity according to the access token, which can improve the reliability and security of the communication system.

It is to be understood that the foregoing general description and the following detailed description are exemplary and explanatory only and are not meant to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram showing a communication system to which embodiments of the present disclosure are applicable according to an exemplary embodiment;
Fig. 2 is a schematic diagram showing a 5G communication system according to an exemplary embodiment;
Fig. 3 is a flow chart showing a subscription processing method according to an exemplary embodiment;
Fig. 4 is a flow chart showing a subscription processing method according to an exemplary embodiment;
Fig. 5 is a flow chart showing a subscription processing method according to an exemplary embodiment;
Fig. 6 is a flow chart showing a subscription processing method according to an exemplary embodiment;
Fig. 7 is a flow chart showing a subscription processing method according to an exemplary embodiment;
Fig. 8 is a flow chart showing a subscription processing method according to an exemplary embodiment;
Fig. 9 is a block diagram of a subscription processing apparatus according to an exemplary embodiment;
Fig. 10 is a block diagram of a subscription processing apparatus according to an exemplary embodiment;
Fig. 11 is a block diagram of a subscription processing apparatus according to an exemplary embodiment;
Fig. 12 is a block diagram of a subscription processing apparatus according to an exemplary embodiment;
Fig. 13 is a block diagram of a subscription processing apparatus according to an exemplary embodiment.

### DETAILED DESCRIPTION

Exemplary embodiments will be described in detail herein, examples of which are shown in the accompanying drawings. When the following description refers to the drawings, the same numbers in different drawings represent the same or similar elements unless otherwise indicated. The implementations described in the following exemplary embodiments do not represent all implementations consistent with the present disclosure. Instead, they are merely examples of apparatuses and methods consistent with some aspects of the present disclosure as detailed in the appended claims.

It should be noted that all actions of obtaining signals, information or data in the present disclosure are carried out in compliance with the relevant data protection laws and policies of the country where the apparatus is located and with the authorization given by the owner of the corresponding apparatus.

In the present disclosure, the terms such as "first", "second" are used to distinguish similar objects and are not necessarily understood as implying a specific order or sequence. In addition, in the description with reference to the accompanying drawings, the same symbols in different drawings represent the same elements, unless otherwise stated.

In the description of the present disclosure, unless otherwise specified, "multiple" means two or more than two, and other quantifiers are similar; "at least one of the following" or similar expressions refers to any combination of following items, i.e., including a single item or any combination of plural items. For example, at least one of a, b, or c can represent: a, b, c, a-b, a-c, b-c, or a-b-c, where a, b, c can be single item or multiple items; "and/or" describes an association relationship of associated objects, and indicates that there can be three relationships; for example, A and/or B can represent the following three relationships: A exists alone, both A and B exist, and B exists alone, where A and B can be single object or plural objects.

Although operations are described in a particular order in the drawings in the disclosed embodiments, it should not be understood as requiring that the operations are performed in the particular order shown or in a serial order, or requiring that all the operations shown are performed to obtain the desired results. In certain circumstances, multitasking and parallel processing may be advantageous.

In the 4G network capability exposure architecture defined by 3GPP, the SCS/AS entity can obtain network information of the 4G network via an interface provided by the SCEF entity. Similarly, in the 5G network capability exposure architecture, the AF entity can obtain the network information of the 5G network via the NEF entity by way of subscription service. For example, in the 5G network, the NEF entity can expose the network information of the 5G network to the AF entity, and the AF can obtain the network information of the 5G network via the NEF by way of subscription service. The network information may include information such as the number of User Equipment (UE) or the number of protocol data units (PDUs) of each network slice. Before exposing the network information to the AF/SCEF entity, how to perform a security verification on the AF entity or SCS/AS entity, especially the security verification of the AF entity or SCS/AS entity outside the operator domain, remains a problem to be solved at present.

In order to solve the above problem, the present disclosure provides a subscription processing method and apparatus, a medium and a chip.

The implementation environment of embodiments of the present disclosure is first introduced below.

Embodiments of the present disclosure may be applied to the 4th Generation (4G) network systems, e.g., Long Term Evolution (LTE) systems, or may be applied to communication systems such as the 5th Generation (5G) network systems, e.g., access networks using new radio access technology (New RAT), or cloud radio access network (CRAN).

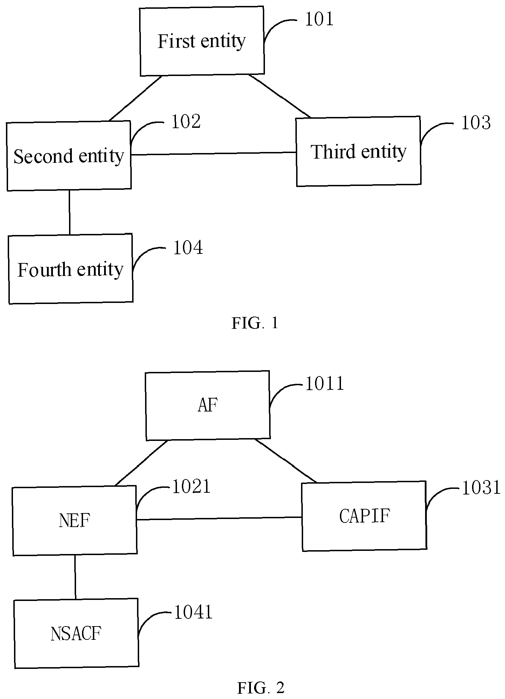

Fig. 1 is a schematic diagram of a communication system according to an exemplary embodiment, to which embodiments of the present disclosure are applicable. As shown in Fig. 1, the communication system may include: a first entity 101, a second entity 102, a third entity 103, and a fourth entity 104, in which the first entity 101 may be an entity providing application functions, the second entity 102 may be an entity providing network exposure functions, the third entity 103 may be an entity providing a security verification function and providing an access token to the first entity 101, and the fourth entity 104 may be an entity providing network information.

For example, the first entity may include: an application function (AF) entity or a services capability server/application server (SCS/AS); the second entity may include: a network exposure function (NEF) entity or a service capability exposure function (SCEF) entity; the third entity may include: a common application programming interface framework (Common API Framework, CAPIF) core function entity; the fourth entity may include any network function entity in the 4G network or the 5G network, for example, a network slice admission control function (NSACF) entity, an access and mobility management function (AMF) entity, a session management function (SMF) entity or the like in the 5G network, or for another example, a policy and charging rules function (PCRF) entity, a packet flow description function (PFDF) entity, a home subscriber server (HSS) entity or the like in the 4G network.

It should be noted that the embodiments of the present disclosure are not limited to the system shown in Fig. 1. The entity in Fig. 1 may be hardware, or software divided from a functional perspective, or a structure that combines hardware and software. The entity in Fig. 1 may be an entity in a 4G communication network architecture or a 5G communication network architecture.

Fig. 2 is a schematic diagram of a 5G communication system according to an exemplary embodiment. As shown in Fig. 2, the communication system is a specific application of the communication system shown in Fig. 1 in a 5G network. The communication system may include an AF entity 1011, an NEF entity 1021, a CAPIF core function entity 1031 and an NSACF entity 1041.

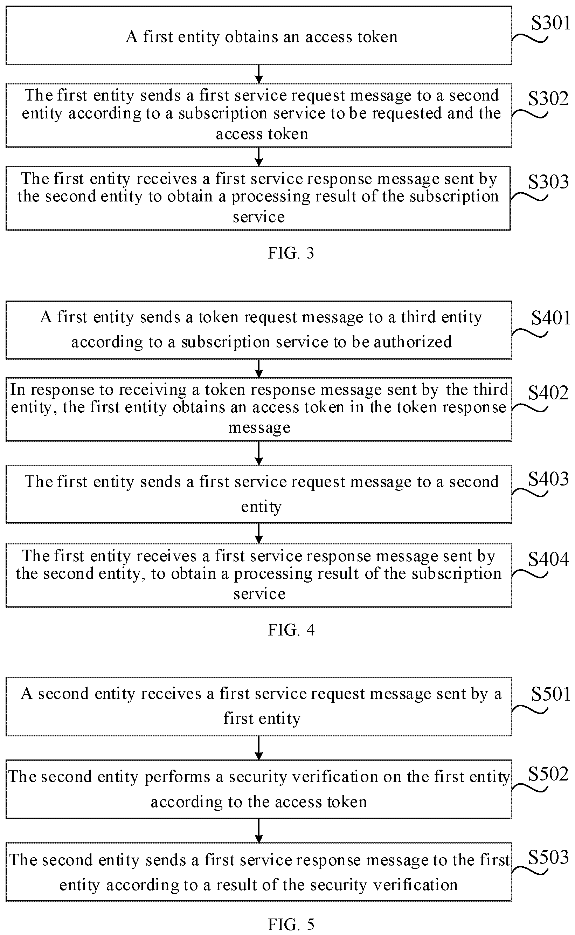

Fig. 3 is a subscription processing method according to an exemplary embodiment, which can be applied to the first entity in the aforementioned communication system. As shown in Fig. 3, the method may include steps S301, S302 and S303.

S301. A first entity obtains an access token.

The access token may be used for representing security verification information used by the first entity in requesting to process the subscription service.

The first entity may be an entity that provides application functions, for example, an AF entity in a 5G network, or an SCS/AS entity in a 4G network.

In some embodiments, the first entity may be a non-trusted functional entity outside the 3GPP operator domain.

In some embodiments, if the first entity has obtained the access token of the subscription service, for example, the first entity has stored the access token locally, and the access token is currently valid, the access token can be directly obtained locally.

In other embodiments, the first entity may also request to obtain the access token by interacting with the third entity via messages.

S302. The first entity sends a first service request message to the second entity according to a subscription service to be requested and the access token.

The first service request message may include the access token.

The second entity may be an entity that provides network exposure functions, for example, an NEF entity in a 5G network, or a SCEF entity in a 4G network.

In some embodiments, before this step, the first entity may establish a second secure session with the second entity. For example, the first entity may undergo authentication according to an authentication policy of the second entity, and establish the second secure session. The second secure session may be a transport layer security (TLS) session, via which confidentiality and data integrity may be achieved for communication between the first and third entities.

For example, the first entity may obtain, from the third entity, the authentication and authorization method corresponding to the second entity, and establish the second security session. Taking the first entity being an AF entity, the second entity being an NEF entity, and the third entity being a CAPIF entity as an example, the AF entity may obtain the authentication and authorization method indicated by the CAPIF entity based on a CAPIF-2e interface, and establish a TLS session with the NEF entity according to the authentication and authorization method. The authentication and authorization method may include NEF side certificate authentication or certificate-based mutual authentication.

S303. The first entity receives a first service response message sent by the second entity to obtain a processing result of the subscription service.

The first service response message may be a message sent by the second entity after performing security verification on the first entity according to the access token.

In some embodiments, if the first service response message is received by the first entity, the first entity can determine that the processing result of the subscription service is a success, that is, the subscription service has been successfully completed, and the service event notification corresponding to the subscription service can be received normally.

In other embodiments, the first service response message received by the first entity may include a security verification result parameter. If the security verification result parameter indicates a successful verification, the first entity can determine that the processing result of the subscription service is a success.

In other embodiments, if the first entity fails to receive the first service response message, or the security verification result parameter in the received first service response message indicates a verification failure, or a first subscription rejection message indicating subscription rejection is received from the second entity, the first entity can determine that the subscription request is rejected.

In other embodiments, the first service response message may include a processing result of the subscription service. For example, in a case that the result of the security verification is a success, the processing result may be acceptance of the service request, and in a case that the result of the security verification is a failure, the processing result may be rejection of the service request.

With the above method, an access token is obtained, and a first service request message is sent to the second entity based on the access token and the subscription service to be requested; a first service response message sent by the second entity is received to obtain the processing result of the subscription service. The access token can be used for representing the security verification information used by the first entity in requesting to process the subscription service; the first service request message can include the access token; the first service response message is a message sent by the second entity after performing security verification on the first entity based on the access token. In this way, when the first entity makes a subscription request, a security verification is performed on the first entity based on the access token, which can improve the reliability and security of the communication system.

Especially in the case that the first entity is a non-trusted functional entity outside the 3GPP operator domain, the above method can be used to implement security verification on the first entity outside the domain.

Fig. 4 is a subscription processing method according to an exemplary embodiment, which can be applied to a first entity. As shown in Fig. 4, the method may include steps S401 to S404.

S401. A first entity sends a token request message to a third entity according to a subscription service to be authorized.

It should be noted that the subscription service to be authorized and the subscription service to be requested may be the same or different.

The third entity can be an entity that provides a security verification function and provides an access token to the first entity, for example, a common application programming interface framework CAPIF core function entity (which may also be referred to as CAPIF entity). The CAPIF core function entity can be used for both 4G network and 5G network.

The first entity may send a token request message to the third entity based on a security specification. For example, the security specification may include an Open Authorization (OAuth) specification, and the OAuth specification may include the OAuth2.0 specification specified in RFC 6749 formulated by the Internet Engineering Task Force (IETF). The token request message may be an access token request message based on O Auth2.0.

In some embodiments, before this step, the first entity may establish a first secure session with the third entity. For example, the first entity may undergo authentication according to the authentication policy of the third entity, and establish the first secure session. Taking the first entity being an AF entity and the third entity being a CAPIF entity as an example, the AF entity may undergo CAPIF-1e authentication according to the 3GPP protocol specification, and establish the first secure session. The first secure session may be a transport layer security (TLS) session, via which confidentiality and data integrity may be achieved for the communication between the first and third entities.

S402. In response to receiving a token response message sent by the third entity, the first entity obtains an access token in the token response message.

The access token is a token determined by the third entity in a case that the third entity determines, based on the token request message, that the first entity satisfies a first preset access authorization policy.

The first preset access authorization policy may be an access authorization policy set locally by the third entity in advance, and is used for representing the access permission of the first entity.

For example, the third entity may verify the token request message according to the O Auth2.0 specification, to determine whether the token request message satisfies the first preset access authorization policy. The OAuth may include the OAuth2.0 specification specified in RFC 6749 formulated by the Internet Engineering Task Force (IETF).

In some embodiments, the token request message may include the service operation type corresponding to the subscription service to be authorized; the first preset access authorization policy may include the access permission of the first entity to the service operation type; the access token is a token determined by the third entity in a case that the third entity determines according to the service operation type that the first entity satisfies the first preset access authorization policy. For example, the third entity determines that the first entity has the access permission to the service operation type, and then the third entity may generate the access token. The access token may include the service operation type corresponding to the subscription service to be authorized.

For example, the service operation types may include an NEF event exposure subscription service (Nnef_EventExposure_Subscribe service), and/or an NEF event exposure unsubscription service (Nnef_EventExposure_Unsubscribe service).

In other embodiments, the token request message may include the service operation type and the subscription parameter corresponding to the subscription service to be authorized; the first preset access authorization policy may include the access permission of the first entity to the service operation type and the subscription parameter; the access token is a token determined by the third entity in a case that the third entity determines based on the subscription parameter and the service operation type that the first entity meets the first preset access authorization policy. For example, the third entity may generate the access token when the third entity determines that the first entity has access permission to the service operation type and the subscription parameter. The access token may include the service operation type and the subscription parameter corresponding to the subscription service to be authorized.

The subscription parameter may include one or more of:
an event identifier (Event ID) corresponding to the subscription service;
an Event Filter parameter corresponding to the subscription service;
Event Reporting information corresponding to the subscription service.

For example, the subscription parameter may include any one, any two or all three of the above parameters. For example, the subscription parameter may include an Event ID and an Event Filter parameter corresponding to the subscription service. The Event ID may include: a first event identifier for representing an amount of user equipment (UEs) (for example, Number of registered UEs), and/or, a second event identifier for representing an amount of protocol data unit (PDU) sessions (for example, established PDU Sessions); the Event Filter parameter may include external network slice information (ENSI) or an application function (AF) service identifier.

It should be noted that, if the first entity already has a valid access token locally (for example, the access token is still valid), there is no need to execute the above steps S401 and S402, and the process may start directly from the following step S403.

S403. The first entity sends a first service request message to the second entity.

The first service request message may include the access token. The second entity may be an entity that provides a network exposure function, for example, an NEF entity in a 5G network, or an SCEF entity in a 4G network.

In some other embodiments, the first service request message may include a service operation type corresponding to the above-mentioned subscription service, and the service operation type includes an Nnef_EventExposure_Subscribe service, and/or an Nnef_EventExposure_Unsubscribe service.

In some other embodiments, the first service request message includes a subscription parameter and a service operation type corresponding to the subscription service. The subscription parameter may include one or more of:
an Event ID corresponding to the subscription service;
an Event Filter parameter corresponding to the subscription service;
Event Reporting information corresponding to the subscription service.

For example, the subscription parameter may include any one, any two or all three of the above parameters. For example, the subscription parameter may include the Event ID and the Event Filter parameter corresponding to the subscription service. The Event ID may include: a first event identifier for representing a subscription to an amount of user equipment (UEs) (for example, Number of registered UEs), and/or, a second event identifier for representing a subscription to an amount of PDU sessions (for example, established PDU Sessions); the Event Filter parameter may include ENSI or an AF service identifier.

In some other embodiments, the subscription parameter may also include Event Reporting information.

S404. The first entity receives a first service response message sent by the second entity, to obtain a processing result of the subscription service.

The first service response message may be a message sent by the second entity after performing security verification on the first entity according to the access token.

In this way, security verification can be performed on the first entity based on the access token and the service operation type in the first service request message; or, security verification can be performed on the first entity based on the access token, the service operation type and the subscription parameter in the first service request message.

In some other embodiments of the present disclosure, the method may further include:
the first entity receives a first event notification message sent by the second entity, in which the first event notification message is a message sent by the second entity to the first entity in response to a second event notification message sent by the fourth entity; and the first entity obtains, according to the first event notification message, event notification information corresponding to the subscription service.

The fourth entity may be an entity that provides network information. For example, the fourth entity may include any network function entity in a 4G network or a 5G network, for example, a network slice admission control function (NSACF) entity, an access and mobility management function (AMF) entity, a session management function (SMF) entity or the like in the 5G network, or for another example, a policy and charging rules function (PCRF) entity, a packet flow description function (PFDF) entity, a home subscriber server (HSS) entity or the like in the 4G network.

The first event notification message may be an event notification message corresponding to the subscription service. For example, the first event notification message may include an Event ID and an Event Filter parameter corresponding to the subscription service. The first event notification message may also include Event Reporting information.

In some embodiments, taking the first entity being an AF entity and the second entity being an NEF entity as an example, in a case that the service operation type corresponding to the subscription service includes the Nnef_EventExposure_Subscribe service, the first event notification message may include Nnef_EventExposure_Notify.

By adopting the above method, a notification process of NSACF subscription or unsubscription based on CAPIF authorization can be realized.

Fig. 5 is a subscription processing method according to an exemplary embodiment, which can be applied to the second entity in the aforementioned communication system. As shown in Fig. 5, the method may include steps S501 to S503.

S501. A second entity receives a first service request message sent by a first entity.

The first service request message includes an access token, in which the access token is used for representing security verification information used by the first entity in requesting to process a subscription service.

In some embodiments, the access token is a token obtained by the first entity from the third entity according to the subscription service. The third entity includes: a CAPIF core function entity.

In some embodiments, the first service request message may also include information about the subscription service to be requested, e.g., a service operation type and/or a subscription parameter corresponding to the subscription service to be requested.

In some embodiments, before this step, the second entity may establish a second secure session with the first entity. For example, the first entity may undergo authentication according to the authentication policy of the second entity, and establish the second secure session. The second secure session may be a TLS session, via which confidentiality and data integrity may be achieved for communication between the first and third entities.

For example, the first entity may establish the second security session according to the authentication and authorization method corresponding to the second entity that is obtained from the third entity. Taking the first entity being an AF entity, the second entity being an NEF entity, and the third entity being a CAPIF entity as an example, the AF entity may obtain the authentication and authorization method indicated by the CAPIF entity via the CAPIF-2e interface, and establish a TLS session with the NEF entity according to the authentication and authorization method. The authentication and authorization method may include NEF side certificate authentication or certificate-based mutual authentication.

S502. The second entity performs a security verification on the first entity according to the access token.

For example, the second entity may perform one or more security verifications among integrity check, signature verification, and encryption verification on the access token, to determine whether the access token is credible. For example, the integrity of the access token may be verified by means of the signature information of the access token. In a case that it is determined that the integrity verification performed on the access token succeeds, it may also be determined based on the content of the access token whether the first entity has the permission.

S503. The second entity sends a first service response message to the first entity according to a result of the security verification.

The first service response message may include a processing result of the subscription service.

For example, in a case that the result of the security verification is a success, the processing result may be accepting the service request, and in a case that the result of the security verification is a failure, the processing result may be rejecting the service request.

In some embodiments, taking the first entity being an AF entity, the second entity being an NEF entity, and the third entity being a CAPIF entity as an example, the NEF entity may determine whether the AF entity is authorized to perform the requested subscription service by checking the access token in the first service request message sent by the AF entity. For example, the NEF may verify the integrity of the access token by verifying the signature of the CAPIF entity. If the integrity verification performed on the access token succeeds, the NEF may verify the request of the AF based on the authorization declaration parameter (e.g., service operation type and/or subscription parameter) in the access token. For example, the NEF may check whether the authorization declaration parameter in the access token matches the request declaration parameter (e.g., service operation type and/or subscription parameter) in the first service request message. If they match, the access token verification succeeds, and a first service response message representing successful subscription processing may be sent to the first entity; otherwise, if the verification fails, the subscription request may be rejected, for example, no message is sent to the first entity, or a first subscription rejection message may be sent to the first entity, or a first service response message with a security verification result parameter indicating verification failure may be sent to the first entity.

In this way, when a first entity makes a subscription request, security verification is performed on the first entity based on the access token, which can improve the reliability and security of the communication system.

In some embodiments, the access token includes a service operation type, and the first service request message also includes a service operation type corresponding to the subscription service to be requested; thus, the security verification in the step S502 may include the following method.

Firstly, according to the first service request message, the service operation type in the access token and the service operation type corresponding to the subscription service to be requested are obtained.

For example, the service operation type may include an Nnef_EventExposure_Subscribe service, and/or an Nnef_EventExposure_Unsubscribe service.

Secondly, it is determined whether the service operation type of the access token is the same as the service operation type corresponding to the subscription service to be requested.

Next, in a case that the service operation type of the access token is the same as the service operation type corresponding to the subscription service to be requested, it is determined whether the subscription parameter corresponding to the subscription service to be requested satisfies a second preset access authorization policy.

Finally, in a case that the subscription parameter satisfies the second preset access authorization policy, it is determined that the security verification is successful.

The second preset access authorization policy includes an access permission of the first entity to the subscription parameter.

In some embodiments, the subscription parameter may include one or more of:
an Event ID corresponding to the subscription service;
an Event Filter parameter corresponding to the subscription service;
Event Reporting information corresponding to the subscription service.

For example, the subscription parameter may include an Event ID and an Event Filter parameter corresponding to the subscription service. The Event ID may include: a first event identifier for representing a subscription to an amount of user equipment (UEs) (e.g., Number of registered UEs), and/or a second event identifier for representing a subscription to an amount of PDU sessions (e.g., established PDU Sessions); the Event Filter parameter may include ENSI or an AF service identifier.

In some other embodiments, the access token includes a service operation type and a subscription parameter; the first service request message includes a service operation type and a subscription parameter corresponding to the subscription service to be requested.

Thus, the security verification in step S502 may include the following method.

Firstly, according to the first service request message, the service operation type and the subscription parameter in the access token, and the service operation type and the subscription parameter corresponding to the subscription service to be requested are obtained.

Secondly, it is determined whether the service operation type of the access token is the same as the service operation type corresponding to the subscription service to be requested, and whether the subscription parameter of the access token is the same as the subscription parameter corresponding to the subscription service.

Finally, in a case that the service operation type of the access token is the same as the service operation type corresponding to the subscription service to be requested, and the subscription parameter of the access token is the same as the subscription parameter corresponding to the subscription service to be requested, it is determined that the security verification is successful.

For example, the service operation type includes an Nnef_EventExposure_Subscribe service, and/or an Nnef_EventExposure_Unsubscribe service. The subscription parameter may include an Event ID and an Event Filter parameter corresponding to the subscription service. The Event ID may include: a first event identifier for representing a subscription to an amount of user equipment (UEs) (for example, Number of registered UEs), and/or a second event identifier for representing a subscription to an amount of PDU sessions (for example, established PDU sessions); the Event Filter parameter may include ENSI or an AF service identifier.

In some embodiments, the subscription parameter may include one or more of:
an Event ID corresponding to the subscription service;
an Event Filter parameter corresponding to the subscription service;
Event Reporting information corresponding to the subscription service.

In some other embodiments of the present disclosure, the method may further include:
the second entity sends a first event notification message to the first entity in response to receiving a second event notification message sent by the fourth entity.

The first event notification message is used for instructing the first entity to obtain event notification information corresponding to the subscription service to be requested.

The fourth entity may be an entity that provides network information. For example, the fourth entity may include any network function entity in a 4G network or a 5G network, for example, a network slice admission control function (NSACF) entity, an access and mobility management function (AMF) entity, a session management function (SMF) entity or the like in the 5G network, or for another example, a policy and charging rules function (PCRF) entity, a packet flow description function (PFDF) entity, a home subscriber server (HSS) entity or the like in the 4G network.

The second event notification message may be an event notification message corresponding to the subscription service to be requested. For example, the second event notification message may include an Event ID and an Event Filter parameter corresponding to the subscription service, and the first event notification message may also include Event Reporting information.

Similarly, the first event notification message may also be an event notification message corresponding to the subscription service to be requested, and the parameters of the first event notification message may be obtained according to the second event notification message, for example, some parameters in the second event notification message are used as parameters in the first event notification message. For example, the first event notification message may include an Event ID and an Event Filter parameter corresponding to the subscription service, and the first event notification message may include Event Reporting information.

In some embodiments, the Event Filter parameter in the second event notification message includes single network slice selection assistance information (S-NSSAI), and the second entity can map S-NSSAI to ENSI or AF service identifier. In this way, the Event Filter parameter in the first event notification message can include the ENSI or AF service identifier.

In some embodiments, taking the first entity being an AF entity, the second entity being an NEF entity, and the fourth entity being an NSACF entity as an example, in a case that the service operation type corresponding to the subscription service to be requested includes the Nnef_EventExposure_Subscribe service, the second event notification message may include Nnsact EventExposure Notify, and the first event notification message may include Nnef_EventExposure_Notify.

In this way, event notification information corresponding to the subscription service may be sent to the first entity via the first event notification message.

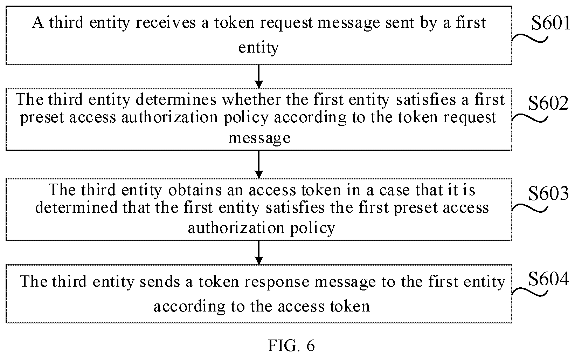

Fig. 6 is a subscription processing method according to an exemplary embodiment, which can be applied to a third entity in the aforementioned communication system. As shown in Fig. 6, the method may include steps S601 to S604.

S601. A third entity receives a token request message sent by a first entity.

The token request message is a message sent by the first entity according to the subscription service to be authorized.

It should be noted that the subscription service to be authorized and the subscription service to be requested may be the same or different.

The third entity may be an entity that provides a security verification function and provides an access token to the first entity, for example, a CAPIF core function entity (which may also be referred to as a CAPIF entity), which can be used in both 4G and 5G networks. The first entity may be an entity that provides an application function, for example, an AF entity in a 5G network, or an SCS/AS entity in a 4G network.

In some embodiments, the first entity may be a non-trusted functional entity outside the 3GPP operator domain.

The first entity may send a token request message to the third entity based on a security specification. For example, the security specification may include an OAuth specification, and the OAuth specification may include an OAuth2.0 specification specified in RFC 6749 formulated by IETF. The token request message may be an access token request message based on O Auth2.0.

In some embodiments, before this step, the first entity may establish a first secure session with the third entity. For example, the first entity may undergo authentication according to the authentication policy of the third entity, and establish the first secure session. Taking the first entity being an AF entity and the third entity being a CAPIF entity as an example, the AF entity may undergo CAPIF-1e authentication according to the 3GPP protocol specification, and establish the first secure session. The first secure session may be a TLS session, via which confidentiality and data integrity may be achieved for the communication between the first and third entities.

S602. The third entity determines whether the first entity satisfies a first preset access authorization policy according to the token request message.

S603. The third entity obtains an access token in a case that it is determined that the first entity satisfies the first preset access authorization policy.

S604. The third entity sends a token response message to the first entity according to the access token, in which the token response message is used for instructing the first entity to obtain the access token.

In this way, when the first entity requests a token for a subscription service, an access token can be sent to the first entity in a case that the third entity determines that the first entity satisfies a first preset access authorization policy, thereby improving the reliability and security of the communication system.

The first preset access authorization policy may be an access authorization policy set locally by the third entity in advance, and is used for representing the access permission of the first entity. The access token may be used for representing the security verification information used by the first entity in requesting to process the subscription service.

In some embodiments, the token request message may include the service operation type corresponding to the subscription service to be authorized; the first preset access authorization policy may include an access permission of the first entity to the service operation type. In the step S602, the third entity may determine whether the first entity has access permission to the service operation type, and if the first entity has the access permission to the service operation type, it may be determined that the first entity satisfies the first preset access authorization policy.

The third entity may generate an access token according to the service operation type corresponding to the subscription service to be authorized. For example, the service operation type corresponding to the subscription service to be authorized may be used as a part of the access token or may be used as a parameter in the access token.

For example, the service operation types may include an Nnef_EventExposure_Subscribe service, and/or an Nnef_EventExposure_Unsubscribe service.

In some other embodiments, the token request message may include the service operation type and the subscription parameter corresponding to the subscription service; the first preset access authorization policy may include the access permission of the first entity to the service operation type and the subscription parameter. In the step S602, the third entity may determine whether the first entity has the access permission to the service operation type and the subscription parameter. If the first entity has the access permission to the service operation type and the subscription parameter, it may be determined that the first entity satisfies the first preset access authorization policy.

The third entity may generate an access token according to the service operation type and the subscription parameter corresponding to the subscription service to be authorized. For example, the service operation type and the subscription parameter corresponding to the subscription service to be authorized may be used as a part of the access token or may be used as a parameter in the access token.

For example, the subscription parameter may include an Event ID and an Event Filter parameter corresponding to the subscription service. The Event ID may include: a first event identifier for representing an amount of user equipment (UEs) (e.g., Number of registered UEs), and/or a second event identifier for representing an amount of PDU sessions (e.g., established PDU sessions); the Event Filter parameter may include ENSI or an AF service identifier.

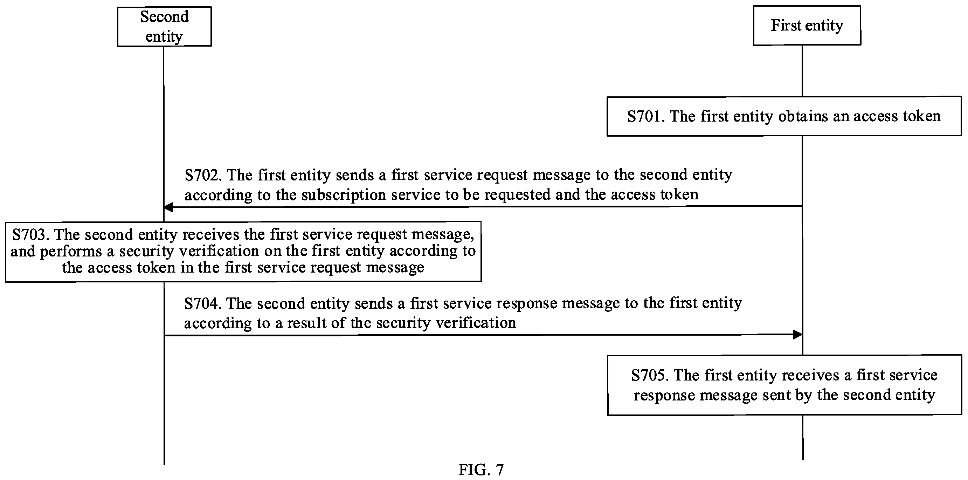

Fig. 7 is a subscription processing method according to an exemplary embodiment. The method may include following steps:
S701, the first entity obtains an access token;
S702, the first entity sends a first service request message to the second entity according to the subscription service to be requested and the access token;
in which the first service request message may include the access token;
S703, the second entity receives the first service request message, and performs a security verification on the first entity according to the access token in the first service request message;
S704, the second entity sends a first service response message to the first entity according to a result of the security verification; and
S705, the first entity receives a first service response message sent by the second entity.

The first entity may obtain, according to the first service response message, the processing result of the subscription service to be requested.

The first entity and the second entity can be entities in the communication system shown in Fig. 1, for example, the first entity may include: an AF entity or an SCS/AS entity; the second entity may include: an NEF entity or an SCEF entity.

In this way, when a first entity makes a subscription request, security verification is performed on the first entity based on the access token, which can improve the reliability and security of the communication system.

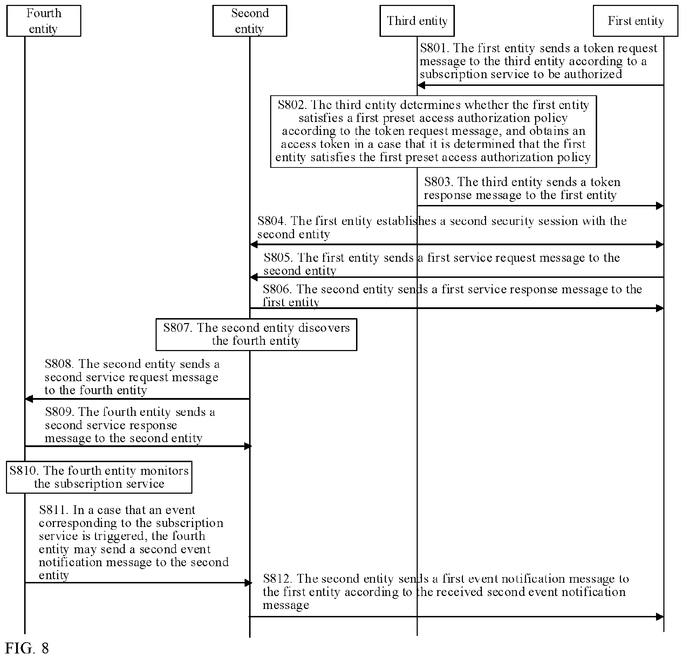

Fig. 8 is a subscription processing method according to an exemplary embodiment. The method may include steps S801 to S812.

S801. The first entity sends a token request message to the third entity according to a subscription service to be authorized.

In some embodiments, the first entity may obtain an access token from the third entity based on an OAuth specification, which may include an O Auth2.0 specification specified in RFC 6749 formulated by IETF. For example, the token request message may be an access token request message based on O Auth2.0.

In some embodiments, before this step, the first entity may establish a first secure session with the third entity. For example, the first entity may undergo authentication according to the authentication policy of the third entity, and establish the first secure session. Taking the first entity being an AF entity and the third entity being a CAPIF entity as an example, the AF entity may undergo CAPIF-1e authentication according to the 3GPP protocol specification, and establish the first secure session. The first secure session may be a TLS session, via which confidentiality and data integrity may be achieved for the communication between the first and third entities.

S802. The third entity determines whether the first entity satisfies a first preset access authorization policy according to the token request message, and obtains an access token in a case that it is determined that the first entity satisfies the first preset access authorization policy.

For example, the third entity may verify the token request message according to the O Auth2.0 specification, to determine whether the token request message satisfies the first preset access authorization policy. The OAuth may include the OAuth2.0 specification specified in RFC 6749 formulated by IETF.

In some embodiments, the token request message may include the service operation type corresponding to the subscription service to be authorized; the first preset access authorization policy may include an access permission of the first entity to the service operation type; the access token is a token determined by the third entity in a case that the third entity determines according to the service operation type that the first entity satisfies the first preset access authorization policy. For example, the third entity determines that the first entity has access permission to the service operation type, and then generates the access token. The access token may include the service operation type corresponding to the subscription service to be authorized.

For example, the above service operation types may include an Nnef_EventExposure_Subscribe service, and/or an Nnef_EventExposure_Unsubscribe service.

In other embodiments, the token request message may include the service operation type and the subscription parameter corresponding to the subscription service to be authorized; the first preset access authorization policy may include the access permission of the first entity to the service operation type and the subscription parameter; the access token is a token determined by the third entity in a case that the third entity determines based on the subscription parameter and the service operation type that the first entity meets the first preset access authorization policy. For example, the third entity may generate the access token in a case that the third entity determines that the first entity has access permission to the service operation type and the subscription parameter. The access token may include the service operation type and the subscription parameter corresponding to the subscription service to be authorized.

For example, the subscription parameter may include an Event ID and an Event Filter parameter corresponding to the subscription service. The Event ID may include: a first event identifier for representing an amount of user equipment (UEs) (e.g., Number of registered UEs), and/or a second event identifier for representing an amount of PDU sessions (e.g., established PDU sessions); the Event Filter parameter may include ENSI or an AF service identifier.

S803. The third entity sends a token response message to the first entity.

The token response message may include the access token. In this way, the first entity can obtain the security verification information (that is, the access token) used in the processing of the subscription service.

It should be noted that if the first entity already has a valid access token locally (for example, the access token is still valid), the method may not include the above steps S801 to S803, and directly start from the following step S804 or S805.

S804. The first entity establishes a second security session with the second entity.

The second security session may include a TLS session. The first entity may establish the second security session according to the authentication and authorization method corresponding to the second entity that is obtained from the third entity.

Similarly, taking the first entity being an AF entity, the second entity being an NEF entity, and the third entity being a CAPIF entity as an example, the AF entity can obtain the authentication and authorization method indicated by the CAPIF entity via the CAPIF-2e interface, and establish a TLS session with the NEF entity according to the authentication and authorization method. The authentication and authorization method may include NEF side certificate authentication or certificate-based mutual authentication.

S805. The first entity sends a first service request message to the second entity.

In some embodiments, the first service request message may include the access token and the subscription service to be requested.

In some other embodiments, the first service request message may include a service operation type corresponding to the subscription service to be requested, and the service operation type includes an Nnef_EventExposure_Subscribe service, and/or an Nnef_EventExposure_Unsubscribe service.

In some other embodiments, the first service request message includes the subscription parameter and the service operation type corresponding to the subscription service to be requested, and the subscription parameter may include an Event ID and an Event Filter parameter corresponding to the subscription service. The Event ID may include: a first event identifier for representing a subscription to an amount of user equipment (UEs) (e.g., Number of registered UEs), and/or a second event identifier for representing a subscription to an amount of PDU sessions (e.g., established PDU sessions); the Event Filter parameter may include ENSI or an AF service identifier.

In some other embodiments, the subscription parameter may also include Event Reporting information.

S806. The second entity sends a first service response message to the first entity.

In this step, the second entity may perform a security verification on the first entity based on the access token, and send a first service response message to the first entity based on the result of the security verification; the first service response message may include a processing result of the subscription service.

Similarly, taking the first entity being an AF entity, the second entity being an NEF entity, and the third entity being a CAPIF entity as an example, the NEF entity can determine whether the AF entity is authorized to perform the requested subscription service by checking the access token in the first service request message sent by the AF entity. For example, the NEF can verify the integrity of the access token by verifying the signature of the CAPIF entity. If the integrity verification performed on the access token succeeds, the NEF may verify the request of the AF based on the authorization declaration parameter (e.g., service operation type and/or subscription parameter) in the access token. For example, the NEF may check whether the authorization declaration parameter in the access token matches the request declaration parameter (e.g., service operation type and/or subscription parameter) in the first service request message. If they match, the access token verification succeeds, and a first service response message representing successful subscription processing may be sent to the first entity; otherwise, if the verification fails, the subscription request may be rejected, for example, no message is sent to the first entity, or a first subscription rejection message may be sent to the first entity, or a first service response message with a security verification result parameter indicating verification failure may be sent to the first entity.

It should be noted that the access token may include the service operation type, or may include the service operation type and the subscription parameter. In the case that contents of the access tokens vary from each other, the second entity may perform different security verification processes. For the specific implementation, references may be made to the description in the above embodiments, and a detailed description is omitted here.

In this way, the first entity can obtain the processing result of the subscription service according to the received first service response message.

S807. The second entity discovers the fourth entity.

The second entity may determine a fourth entity in the network that provides the subscription service.

Taking the first entity being an AF entity, the second entity being an NEF entity, and the fourth entity being an NSACF entity as an example, if the AF entity is deployed outside the 3GPP operator domain, the NEF entity can map the ENSI of the AF entity to S-NSSAI, and then query a network repository function (NRF) entity to find the NSACF entity responsible for the requested S-NSSAI.

S808. The second entity sends a second service request message to the fourth entity.

For example, the second entity (NEF) may forward the service operation type and/or subscription parameter included in the first service request message to the fourth entity via the second service request message.

In some embodiments, in a case that the subscription parameter includes an Event Filter parameter, and the Event Filter parameter includes ENSI, the ENSI may be mapped to S -NSSAI. In other words, the Event Filter parameter included in the second service request message may be S-NSSAI.

In some embodiments, in a case that the subscription parameter includes an Event Filter parameter, and the Event Filter parameter includes an AF service identifier, the AF service identifier can be mapped to S-NSSAI. In other words, the Event Filter parameter included in the second service request message may be S-NSSAI.

S809. The fourth entity sends a second service response message to the second entity.

In some embodiments, taking the second entity being an NEF entity and the fourth entity being an NSACF entity as an example, the service operation type of the second service request message may be an Nnsacf_SliceEventExposure_Subscribe Request, or an Nnsacf_SliceEventExposure_Unsubscribe Request; the service operation type of the second service response message may include an Nnsacf_SliceEventExposure_Subscribe Response, or an Nnsacf_SliceEventExposure_Unsubscribe Response.

S810. The fourth entity monitors the subscription service.

S811. In a case that an event corresponding to the subscription service is triggered, the fourth entity may send a second event notification message to the second entity.

S812. The second entity sends a first event notification message to the first entity according to the received second event notification message.

Taking the first entity being an AF entity, the second entity being an NEF entity, and the fourth entity being an NSACF entity as an example, if the service operation type corresponding to the subscription service in the first service request message sent by the AF entity to the NEF entity is the Nnef_EventExposure_Subscribe service, then the service operation type of the second service request message sent by the NEF entity to the NSACF entity may be Nnsacf_SliceEventExposure_Subscribe Request, the service operation type of the second service response message may include an Nnsacf_SliceEventExposure_Subscribe Response, and the service operation type of the first service response message may be an Nnef_EventExposure_Subscribe Response.

If the Event ID in the subscription parameter of the subscription service is a first event identifier for representing a subscription to an amount of UEs (for example, Number of registered UEs), the NSACF entity can monitor an event corresponding to the subscription service (for example, change in an amount of UEs) according to the second service request message. In a case that the event is triggered, a second event notification message (for example, Nnsacf_SliceEvent Exposure _Notify message) can be sent to the NEF entity. The message may include an Event ID, an Event Filter parameter, and Event Reporting information. Based on the received second event notification message, the NEF sends a first event notification message (for example, Nnef_SliceEvent Exposure _Notify message) to the first entity, so that the first entity obtains the event notification.

In some embodiments, the first event notification message may be event notification information directed to a single network slice, for example, the first event notification message may be Nnef_SliceEvent Exposure _Notify (single NSACF).

In some other embodiments, the first event notification message may be event notification information directed to multiple network slices. For example, the first event notification message may be Nnef_SliceEvent Exposure _Notify (multiple NSACFs).

By adopting the above method, a notification process of NSACF subscription or unsubscription based on CAPIF authorization can be realized.

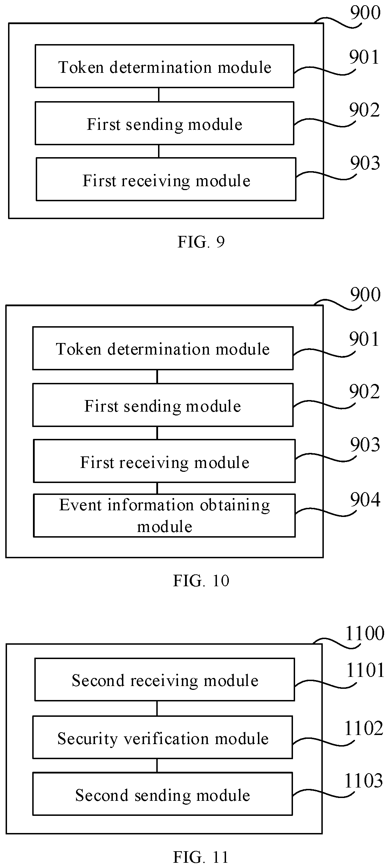

Fig. 9 is a block diagram of a subscription processing apparatus 900 according to an exemplary embodiment. The apparatus may be applied to a first entity. As shown in Fig. 9, the apparatus 900 may include:
a token determination module 901, configured to obtain an access token, in which the access token is used for representing the security verification information used by the first entity in requesting to process a subscription service;
a first sending module 902, configured to send a first service request message to a second entity according to the subscription service to be requested and the access token, in which the first service request message includes the access token; and
a first receiving module 903, configured to receive a first service response message sent by the second entity, to obtain a processing result of the subscription service, in which the first service response message is a message sent by the second entity after performing security verification on the first entity according to the access token.

In some embodiments, the token determination module 901 is configured to send a token request message to a third entity based on a subscription service to be authorized; in response to receiving a token response message sent by the third entity, obtain an access token in the token response message, in which the access token is a token determined by the third entity in a case that the third entity determines based on the token request message that the first entity satisfies a first preset access authorization policy.

In some embodiments, the token request message includes the service operation type corresponding to the subscription service to be authorized, in which the first preset access authorization policy includes the access permission of the first entity to the service operation type; and the access token is a token determined by the third entity in a case that the third entity determines based on the service operation type that the first entity satisfies the first preset access authorization policy.

In some embodiments, the access token includes the service operation type corresponding to the subscription service to be authorized.

In some embodiments, the token request message includes the service operation type and subscription parameter corresponding to the subscription service to be authorized, in which the first preset access authorization policy includes the access permission of the first entity to the service operation type and the subscription parameter; the access token is a token determined by the third entity in a case that the third entity determines based on the subscription parameter and the service operation type that the first entity satisfies the first preset access authorization policy.

In some embodiments, the access token includes the service operation type and the subscription parameter corresponding to the subscription service to be authorized.

In some embodiments, the third entity includes: a CAPIF core function entity.

In some embodiments, the first service request message includes a service operation type corresponding to the subscription service, and the service operation type includes: an Nnef_EventExposure_Subscribe service, and/or an Nnef_EventExposure_Unsubscribe service.

In some embodiments, the first service request message further includes a subscription parameter corresponding to the subscription service, and the subscription parameter includes one or more of:
an Event ID corresponding to the subscription service;
an Event Filter parameter corresponding to the subscription service; or
Event Reporting information corresponding to the subscription service.

In some embodiments, the Event ID includes: a first event identifier for representing a subscription to an amount of UEs, and/or a second event identifier for representing a subscription to an amount of PDU sessions; the Event Filter parameter includes ENSI or an AF service identifier.

In some embodiments, the first entity includes: an AF entity or an SCS/AS; the second entity includes: an NEF entity or an SCEF entity.

Fig. 10 is a block diagram of a subscription processing apparatus 900 according to an exemplary embodiment. As shown in Fig. 10, the apparatus may further include:
an event information obtaining module 904, configured to receive a first event notification message sent by the second entity, in which the first event notification message is a message sent by the second entity to the first entity in response to a second event notification message sent by the fourth entity; and obtain event notification information corresponding to the subscription service to be requested according to the first event notification message.

In some embodiments, the fourth entity includes an NSACF entity.

Fig. 11 is a block diagram of a subscription processing apparatus 1100 according to an exemplary embodiment. The apparatus may be applied to a second entity. As shown in Fig. 11, the apparatus 1100 may include:
a second receiving module 1101, configured to receive a first service request message sent by a first entity, in which the first service request message includes an access token, and the access token is used for representing security verification information used by the first entity in requesting to process the subscription service;
a security verification module 1102, configured to perform a security verification on the first entity according to the access token; and
a second sending module 1103, configured to send a first service response message to the first entity according to a result of the security verification, in which the first service response message includes a processing result of the subscription service.

In some embodiments, the access token is a token obtained by the first entity from a third entity according to the subscription service.

In some embodiments, the access token includes a service operation type; the security verification module 1102 is configured to: determine that the subscription parameter corresponding to the subscription service satisfies a second preset access authorization policy in a case that the service operation type of the access token is the same as the service operation type corresponding to the subscription service to be requested, in which the second preset access authorization policy includes the access permission of the first entity to the subscription parameter; and determine that the security verification is successful in a case that the subscription parameter satisfies the second preset access authorization policy.

In some embodiments, the access token includes a service operation type and a subscription parameter; the security verification module 1102 is configured to determine that the security verification is successful in a case that the service operation type of the access token is the same as the service operation type corresponding to the subscription service to be requested, and the subscription parameter of the access token is the same as the subscription parameter corresponding to the subscription service to be requested.

In some embodiments, the third entity includes: a CAPIF core function entity.

In some embodiments, the first service request message includes a service operation type corresponding to the subscription service, and the service operation type includes: an Nnef_EventExposure_Subscribe service, and/or an Nnef_EventExposure_Unsubscribe service.

In some embodiments, the first service request message further includes a subscription parameter corresponding to the subscription service, and the subscription parameter may include one or more of:
an Event ID corresponding to the subscription service;
an Event Filter parameter corresponding to the subscription service; or
Event Reporting information corresponding to the subscription service.

In some embodiments, the Event ID includes: a first event identifier for representing an amount of UEs, and/or a second event identifier for representing an amount of PDU sessions; the Event Filter parameter includes ENSI or an AF service identifier.

In some embodiments, the first entity includes: an AF entity or an SCS/AS; the second entity includes: an NEF entity or an SCEF entity.

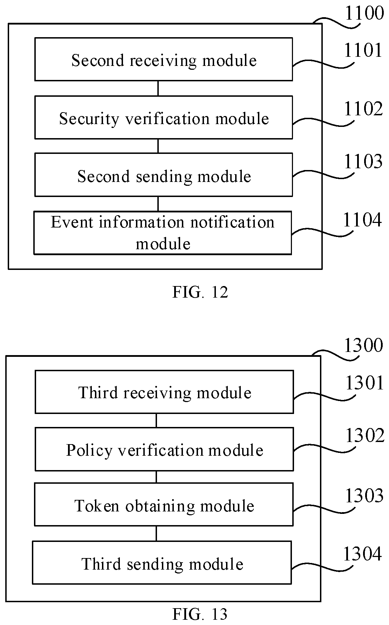

Fig. 12 is a block diagram of a subscription processing apparatus 1100 according to an exemplary embodiment. As shown in Fig. 12, the apparatus may include:
an event information notification module 1104, configured to send a first event notification message to the first entity in response to receiving a second event notification message sent by a fourth entity, in which the first event notification message is used for instructing the first entity to obtain event notification information corresponding to the subscription service to be requested.

In some embodiments, the fourth entity includes an NSACF entity.

Fig. 13 is a block diagram of a subscription processing apparatus 1300 according to an exemplary embodiment. The apparatus may be applied to a third entity. As shown in Fig. 13, the apparatus 1300 may include:
a third receiving module 1301, configured to receive a token request message, in which the token request message is a message sent by a first entity according to a subscription service to be authorized;
a policy verification module 1302, configured to determine, according to the token request message, whether the first entity satisfies a first preset access authorization policy;
a token obtaining module 1303, configured to obtain an access token in a case that it is determined that the first entity satisfies the first preset access authorization policy, in which the access token is used for representing the security verification information used by the first entity in requesting to process the subscription service; and
a third sending module 1304, configured to send a token response message to the first entity according to the access token, in which the token response message is used for instructing the first entity to obtain the access token.

In some embodiments, the token request message includes a service operation type corresponding to a subscription service to be authorized, and the first preset access authorization policy includes an access permission of the first entity to the service operation type;
the policy verification module 1302 is configured to determine that the first entity satisfies the first preset access authorization policy in a case that the first entity has the access permission to the service operation type.

In some embodiments, the token obtaining module 1303 is configured to generate the access token according to the service operation type.

In some embodiments, the token request message includes the service operation type and the subscription parameter corresponding to the subscription service to be authorized; the first preset access authorization policy includes the access permission of the first entity to the service operation type and the subscription parameter;

the policy verification module 1302 is configured to determine that the first entity satisfies the first preset access authorization policy in a case that the first entity has the access permission to the service operation type and the subscription parameter.

In some embodiments, the token obtaining module 1303 is configured to generate the access token according to the service operation type and the subscription parameter.

In some embodiments, the first entity includes: an AF entity or an SCS/AS; the third entity includes: a CAPIF core function entity.

Regarding the apparatus in the above embodiments, the specific manner in which each module performs operations has been described in detail in the embodiment of the method, and will not be elaborated here.

An embodiment of the present disclosure further provides a communication system, which includes: the first entity, the second entity and the third entity mentioned above.

In some embodiments, the first entity may include the subscription processing apparatus 900, the second entity may include the subscription processing apparatus 1100, and the third entity may include the subscription processing apparatus 1300.

In some embodiments, the first entity may include: an AF entity or an SCS/AS entity; the second entity may include: an NEF entity or an SCEF entity; the third entity may include a CAPIF core function entity.

In some other embodiments, the communication system may further include the fourth entity mentioned above. The fourth entity may include any network function entity in a 4G network or a 5G network, for example, an NSACF entity, an AMF entity, an SMF entity or the like in the 5G network, or for another example, a PCRF entity, a PFDF entity, an HSS entity or the like in the 4G network.

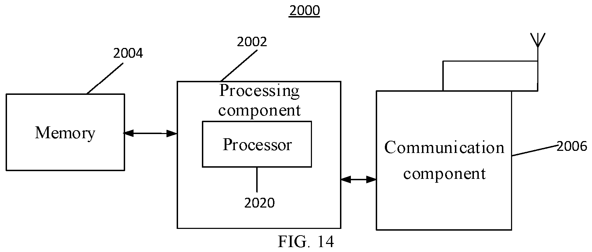

Fig. 14 is a block diagram of a subscription processing apparatus according to an exemplary embodiment. For example, the subscription processing apparatus 2000 may be a terminal device, e.g., a mobile phone, a computer, a digital broadcast terminal, a message transceiver device, a game console, a tablet device, a medical device, a fitness device, a personal digital assistant, etc.; the subscription processing apparatus 2000 may also be a server, e.g., a local server or a cloud server; the subscription processing apparatus 2000 may also be any of the above-mentioned network devices or network entities, e.g., the first entity, the second entity, or the third entity in the communication system shown in Fig. 1.

Referring to Fig. 14, the apparatus 2000 may include one or more of the following components: a processing component 2002, a memory 2004, and a communication component 2006.

The processing component 2002 generally controls the overall operation of the apparatus 2000, such as operations associated with display, phone calls, data communications, camera operations, and recording operations. The processing component 2002 may include one or more processors 2020 to execute instructions, to complete all or part of the steps of the above-mentioned subscription processing method. In addition, the processing component 2002 may include one or more modules to facilitate the interaction between the processing component 2002 and other components. For example, the processing component 2002 may include a multimedia module to facilitate the interaction between a multimedia component and the processing component 2002.

The memory 2004 is configured to store various types of data to support the operation of the apparatus 2000. Examples of such data include: instructions of any application program or method operating on the apparatus 2000, contact data, phone book data, messages, pictures, videos, etc. The memory 2004 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disc.

The communication component 2006 is configured to facilitate wired or wireless communication between the apparatus 2000 and other devices. The apparatus 2000 can access a wireless network based on a communication standard, such as WiFi, 2G or 3G, or a combination thereof. In an exemplary embodiment, the communication component 2006 receives a broadcast signal or broadcast-related information from an external broadcast management system via a broadcast channel. In an exemplary embodiment, the communication component 2006 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the apparatus 2000 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, to perform the above-mentioned subscription processing method.

The apparatus 2000 can be an independent electronic device, and the apparatus 2000 can also be a part of an independent electronic device. For example, in one embodiment, the electronic device can be an integrated circuit (IC) or a chip, in which the integrated circuit can be one IC or a collection of multiple ICs; the chip can include but is not limited to the following types: graphics processing unit (GPU), central processing unit (CPU), field programmable gate array (FPGA), digital signal processor (DSP), application specific integrated circuit (ASIC), System on Chip (SoC), etc. The integrated circuit or chip can be used to execute executable instructions (or codes) to implement the above-mentioned subscription processing methods. The executable instructions can be stored in the integrated circuit or chip, or can be obtained from other apparatuses or devices, for example, the integrated circuit or chip includes a processor, a memory, and an interface for communicating with other apparatuses. The executable instruction may be stored in the processor, and when the executable instruction is executed by the processor, the subscription processing methods may be implemented; alternatively, the integrated circuit or the chip may receive the executable instruction via the interface and covey the executable instruction to the processor for execution, so as to implement the subscription processing methods.

In an exemplary embodiment, a non-transitory computer-readable storage medium including instructions is also provided, e.g., a memory 2004 including instructions, and the instructions can be executed by a processor 2020 of the apparatus 2000 to complete the subscription processing methods. For example, the non-transitory computer-readable storage medium can be a ROM, a random access memory (RAM), a compact disc read-only memory (CD-ROM), a magnetic tape, a floppy disk, an optical data storage device, etc.

In another exemplary embodiment, a computer program product is also provided. The computer program product includes a computer program that can be executed by a programmable apparatus. The computer program has a code portion, which is configured to execute the subscription processing methods when executed by the programmable apparatus.

Those skilled in the art will readily appreciate other implementations of the present disclosure after considering the specification and practicing the present disclosure. This application is intended to cover any variations, uses or adaptations of the present disclosure, which follow the general principles of the present disclosure and include common knowledge or customary technical means in the art that are not disclosed in the present disclosure. The specification and embodiments are to be considered exemplary only, and the true scope and spirit of the present disclosure are defined by the appended claims.

It should be understood that the present disclosure is not limited to the exact structures that have been described above and shown in the drawings, and that various modifications and changes may be made without departing from the scope thereof. The scope of the present disclosure is limited only by the appended claims.

## Claims

1. A subscription processing method, performed by a first entity, comprising:
obtaining an access token, wherein the access token is used for representing security verification information used by the first entity in requesting to process a subscription service;
sending a first service request message to a second entity according to the subscription service to be requested and the access token, wherein the first service request message comprises the access token; and
receiving a first service response message sent by the second entity to obtain a processing result of the subscription service, wherein the first service response message is a message sent by the second entity after performing a security verification on the first entity according to the access token.

2. The method according to claim 1, wherein the obtaining the access token comprises:
sending a token request message to a third entity according to the subscription service to be authorized; and
in response to receiving a token response message sent by the third entity, obtaining the access token from the token response message, wherein the access token is a token determined by the third entity in a case that the third entity determines that the first entity satisfies a first preset access authorization policy based on the token request message.

3. The method according to claim 2, wherein,
the token request message comprises a service operation type corresponding to the subscription service to be authorized; the first preset access authorization policy comprises an access permission of the first entity to the service operation type; and
the access token is a token determined by the third entity in a case that the third entity determines according to the service operation type that the first entity satisfies the first preset access authorization policy.

4. The method according to claim 3, wherein the access token comprises the service operation type corresponding to the subscription service to be authorized.

5. The method according to claim 2, wherein,
the token request message comprises a service operation type and a subscription parameter corresponding to the subscription service to be authorized; the first preset access authorization policy comprises an access permission of the first entity to the service operation type and the subscription parameter; and
the access token is a token determined by the third entity in a case that the third entity determines according to the subscription parameter and the service operation type that the first entity satisfies the first preset access authorization policy.

6. The method according to claim 5, wherein the access token comprises the service operation type and the subscription parameter corresponding to the subscription service to be authorized.

7. The method according to claim 2, wherein the third entity comprises: a common application programming interface framework CAPIF core function entity.

8. The method according to any one of claims 1 to 7, wherein the first service request message comprises a service operation type corresponding to the subscription service to be requested, and the service operation type comprises: an NEF event exposure subscription service Nnef_EventExposure_Subscribe service, and/or an NEF event exposure unsubscription service Nnef_EventExposure_Unsubscribe service.

9. The method according to claim 8, wherein the first service request message further comprises a subscription parameter corresponding to the subscription service to be requested, and the subscription parameter comprises one or more of:
an event identifier Event ID corresponding to the subscription service;
an Event Filter parameter corresponding to the subscription service; or
Event Reporting information corresponding to the subscription service.

10. The method according to claim 9, wherein the event identifier comprises: a first event identifier for representing a subscription to an amount of user equipment UE, and/or a second event identifier for representing a subscription to an amount of protocol data unit PDU sessions; the Event Filter parameter comprises external network slice information ENSI or an application function AF service identifier.

11. The method according to any one of claims 1 to 7, wherein the first entity comprises: an application function AF entity or a services capability server/application server SCS/AS; the second entity comprises: a network exposure function NEF entity or a service capability exposure function SCEF entity.

12. The method according to any one of claims 1 to 7, further comprising:
receiving a first event notification message sent by the second entity, wherein the first event notification message is a message sent by the second entity to the first entity in response to a second event notification message sent by a fourth entity; and
obtaining, based on the first event notification message, event notification information corresponding to the subscription service to be requested.

13. The method according to claim 12, wherein the fourth entity comprises a network slice admission control function NSACF entity.

14. A subscription processing method, performed by a second entity, comprising:
receiving a first service request message sent by a first entity, wherein the first service request message comprises an access token, and the access token is used for representing security verification information used by the first entity in requesting to process a subscription service;
performing a security verification on the first entity according to the access token; and
sending a first service response message to the first entity according to a result of the security verification, wherein the first service response message comprises a processing result of the subscription service.

15. The method according to claim 14, wherein the access token is a token obtained by the first entity from a third entity according to the subscription service.

16. The method according to claim 15, wherein the access token comprises a service operation type; and the performing the security verification on the first entity according to the access token comprises:
in a case that a service operation type of the access token is the same as a service operation type corresponding to the subscription service to be requested, determining that a subscription parameter corresponding to the subscription service satisfies a second preset access authorization policy, wherein the second preset access authorization policy comprises an access permission of the first entity to the subscription parameter; and
in a case that the subscription parameter satisfies the second preset access authorization policy, determining that the security verification is successful.

17. The method according to claim 15, wherein the access token comprises a service operation type and a subscription parameter; and the performing the security verification on the first entity according to the access token comprises:
in a case that the service operation type of the access token is the same as a service operation type corresponding to the subscription service to be requested, and the subscription parameter of the access token is the same as the subscription parameter corresponding to the subscription service to be requested, determining that the security verification is successful.

18. The method according to claim 15, wherein the third entity comprises: a common application programming interface framework CAPIF core function entity.

19. The method according to any one of claims 14 to 18, wherein the first service request message comprises a service operation type corresponding to the subscription service, and the service operation type comprises: an Nnef_EventExposure_Subscribe service, and/or an Nnef_EventExposure_Unsubscribe service.

20. The method according to claim 19, wherein the first service request message further comprises a subscription parameter corresponding to the subscription service, and the subscription parameter comprises one or more of:
an event identifier Event ID corresponding to the subscription service;
an Event Filter parameter corresponding to the subscription service; or
Event Reporting information corresponding to the subscription service.

21. The method according to claim 20, wherein the event identifier comprises: a first event identifier for representing an amount of user equipment UE, and/or a second event identifier for representing an amount of protocol data unit PDU sessions; the Event Filter parameter comprises external network slice information ENSI or an application function AF service identifier.

22. The method according to any one of claims 14 to 18, wherein the first entity comprises: an application function AF entity or a services capability server/application server SCS/AS; the second entity comprises: a network exposure function NEF entity or a service capability exposure function SCEF entity.

23. The method according to any one of claims 14 to 18, further comprising:
in response to receiving a second event notification message sent by a fourth entity, sending a first event notification message to the first entity, wherein the first event notification message is used for instructing the first entity to obtain event notification information corresponding to the subscription service to be requested.

24. The method according to claim 23, wherein the fourth entity comprises a network slice admission control function NSACF entity.

25. An event subscription method, performed by a third entity, comprising:
receiving a token request message, wherein the token request message is a message sent by a first entity according to a subscription service to be authorized;
determining, according to the token request message, whether the first entity satisfies a first preset access authorization policy;
in a case that it is determined that the first entity satisfies the first preset access authorization policy, obtaining an access token, wherein the access token is used for representing security verification information used by the first entity in requesting to process the subscription service; and
sending a token response message to the first entity according to the access token, wherein the token response message is used for instructing the first entity to obtain the access token.

26. The method according to claim 25, wherein the token request message comprises a service operation type corresponding to the subscription service to be authorized, and the first preset access authorization policy comprises an access permission of the first entity to the service operation type;
the determining, according to the token request message, whether the first entity satisfies the first preset access authorization policy comprises:
in a case that the first entity has the access permission to the service operation type, determining that the first entity satisfies the first preset access authorization policy.

27. The method according to claim 26, wherein the obtaining the access token comprises:
generating the access token according to the service operation type corresponding to the subscription service to be authorized.

28. The method according to claim 25, wherein the token request message comprises a service operation type and a subscription parameter corresponding to the subscription service to be authorized; the first preset access authorization policy comprises an access permission of the first entity to the service operation type and the subscription parameter;
the determining, according to the token request message, whether the first entity satisfies the first preset access authorization policy comprises:
in a case that the first entity has the access permission to the service operation type and the subscription parameter, determining that the first entity satisfies the first preset access authorization policy.

29. The method according to claim 28, wherein the obtaining the access token comprises:
generating the access token according to the service operation type and the subscription parameter corresponding to the subscription service to be authorized.

30. The method according to any one of claims 25 to 29, wherein the first entity comprises: an application function AF entity or a services capability server/application server SCS/AS; the third entity comprises: a common application programming interface framework CAPIF core function entity.

31. A subscription processing apparatus, applied to a first entity, comprising:
a token determination module, configured to obtain an access token, wherein the access token is used for representing security verification information used by the first entity in requesting to process a subscription service;
a first sending module, configured to send a first service request message to a second entity according to the subscription service to be requested and the access token, wherein the first service request message comprises the access token; and
a first receiving module, configured to receive a first service response message sent by the second entity to obtain a processing result of the subscription service, wherein the first service response message is a message sent by the second entity after performing a security verification on the first entity according to the access token.

32. A subscription processing apparatus, applied to a second entity, comprising:
a second receiving module, configured to receive a first service request message sent by a first entity, wherein the first service request message comprises an access token, and the access token is used for representing security verification information used by the first entity in requesting to process a subscription service;
a security verification module, configured to perform a security verification on the first entity according to the access token; and
a second sending module, configured to send a first service response message to the first entity according to a result of the security verification, wherein the first service response message comprises a processing result of the subscription service.

33. An event subscription apparatus, applied to a third entity, comprising:
a third receiving module, configured to receive a token request message, wherein the token request message is a message sent by a first entity according to a subscription service to be authorized;
a policy verification module, configured to determine whether the first entity satisfies a first preset access authorization policy according to the token request message;
a token obtaining module, configured to obtain an access token in a case that it is determined that the first entity satisfies the first preset access authorization policy, wherein the access token is used for representing security verification information used by the first entity in requesting to process the subscription service; and
a third sending module, configured to send a token response message to the first entity according to the access token, wherein the token response message is used for instructing the first entity to obtain the access token.

34. A subscription processing apparatus, comprising:
a processor, and a memory for storing processor-executable instructions;
wherein, the processor is configured to execute the steps of the method according to any one of claims 1 to 13, or the processor is configured to execute the steps of the method according to any one of claims 14 to 24, or the processor is configured to execute the steps of the method according to any one of claims 25 to 30.

35. A computer-readable storage medium having computer program instructions stored thereon, wherein when the computer program instructions are executed by a processor, the steps of the method according to any one of claims 1 to 13 are implemented, or when the computer program instructions are executed by a processor, the steps of the method according to any one of claims 14 to 24 are implemented, or when the computer program instructions are executed by a processor, the steps of the method according to any one of claims 25 to 30 are implemented.

36. A chip, comprising a processor and an interface, wherein the processor is configured to read instructions to execute the steps of the method according to any one of claims 1 to 13, or the processor is configured to read instructions to execute the steps of the method according to any one of claims 14 to 24, or the processor is configured to read instructions to execute the steps of the method according to any one of claims 25 to 30.
